**Europäisches Patentamt**

**European Patent Office**

**Office européen des brevets**

(11) Veröffentlichungsnummer: **0 339 391**
**A2**

(12) # EUROPÄISCHE PATENTANMELDUNG

(21) Anmeldenummer: **89106690.4**

(51) Int. Cl.⁴: $C08J\ 5/18$

(22) Anmeldetag: **14.04.89**

(30) Priorität: **27.04.88 DE 3814162**

(43) Veröffentlichungstag der Anmeldung:
**02.11.89 Patentblatt 89/44**

(84) Benannte Vertragsstaaten:
**DE FR GB IT**

(71) Anmelder: **BAYER AG**

**D-5090 Leverkusen 1 Bayerwerk(DE)**

(72) Erfinder: **Kosfeld, Robert, Prof. Dr.**
**In den Atzenbenden 30**
**D-5100 Achen(DE)**
Erfinder: **Hess, Michael, Dr.**
**Elisabethstrasse 17**
**D-4170 Geldern(DE)**
Erfinder: **Friedrich, Klaus, Dr.**
**Auf der Heide 7**
**D-4100 Duisburg 14(DE)**

(54) **Verfahren zur Herstellung von Folien und anderen Formkörpern.**

(57) Verfahren zur Herstellung von Folien, insbesondere von sehr dünnen Folien aus filmbildenden organischen Hochpolymeren, wobei man das Hochpolymere in einem inerten organischen Lösungsmittel löst, die Lösung mit einer inerten Flüssigkeit in einem Reaktionsgefäß überschichtet - wobei die spezifische Dichte des organischen Lösungsmittels größer als die der inerten Flüssigkeit ist, das organische Lösungsmittel nicht mit der inerten Flüssigkeit mischbar ist und das organische Hochpolymere in der inerten Flüssigkeit unlöslich ist - und die sich an der Grenzfläche zwischen organischem Lösungsmittel, inerter Flüssigkeit und der Wand des Reaktionsgefäßes ausbildende Folie entnimmt.

EP 0 339 391 A2

## Verfahren zur Herstellung von Folien und anderen Formkörpern

Gegenstand der Erfindung ist ein Verfahren zur Herstellung von Folien, insbesondere von sehr dünnen Folien aus filmbildenden organischen Hochpolymeren, das dadurch gekennzeichnet ist, daß man das Hochpolymere in einem inerten organischen Lösungsmittel löst, die Lösung mit einer inerten Flüssigkeit in einem Reaktionsgefäß überschichtet - wobei die spezifische Dichte des organischen Lösungsmittels größer als die der inerten Flüssigkeit ist, das organische Lösungsmittel nicht mit der inerten Flüssigkeit mischbar ist und das organische Hochpolymere in der inerten Flüssigkeit unlöslich ist - und die sich an der Grenzfläche zwischen organischem Lösungsmittel, inerter Flüssigkeit und der Wand des Reaktionsgefäßes ausbildende Folie entnimmt.

Filmbildende organische Hochpolymere im Sinne der Erfindung sind z.B. aromatische Polycarbonate wie Bisphenol-A Polycarbonat, aromatisches Polyestercarbonat, Polyhydantoin, Polyimid, Polyamidimid, Celluloseester, Acrylnitril-Butadien- Styrol-Misch- und Pfropfmischpolymerisate (ABS), Styrol-Acrylnitril-Copolymerisate (SAN), Polystyrol (PS), Polyethersulfon, Polyarylsulfon, Polyesterimid und Polyester, insbesondere Copolyester aus Polyethylenterephthalat mit liquid crystal Struktur oder Gemische solcher Polymerer. Bevorzugt ist aromatisches Polycarbonat, insbesondere auf Basis von Bisphenol-A.

Ebenfalls bevorzugt sind Mischungen aus aromatischem Polycarbonat und Copolyester, die 10 bis 90 Gew.-%, bevorzugt 20 bis 50 Gew.-%, des Polyesters mit liquid crystal Struktur enthalten.

Lösungsmittel für diese Hochpolymeren sind inerte organische Flüssigkeiten mit Dichten größer als die Dichte der weiter unten definierten inerten Flüssigkeit. Geeignete Lösungsmittel sind z.B. Chloroform, Methylenchlorid, 1,2-Di-Chlorethan, Chlorbenzol.

Die inerte Flüssigkeit im Sinne der Erfindung ist insbesondere Wasser. Grundsätzlich muß diese Flüssigkeit mit dem Polymeren unverträglich und mit dem organischen Lösungsmittel nicht mischbar sein. Das organische Lösungsmittel muß eine höhere Dichte haben, damit es mit der inerten Flüssigkeit überschichtet werden kann.

Im allgemeinen kann man das Verfahren wie folgt durchführen:
Man stellt eine Lösung des Hochpolymeren in dem inerten Lösungsmittel, z.B. Chloroform, her und bringt sie in ein Reaktionsgefäß mit relativ geringer Tiefe und großer Oberfläche, z.B eine offene Glasschale. Sodann wird die Lösung mit der inerten Flüssigkeit, z.B. Wasser, überschichtet. Es bildet sich - bei Zimmertemperatur oder auch bei erhöhter Temperatur bis etwa 80° C - auf der Oberfläche der inerten Flüssigkeit eine dünne Folie aus, die mechanisch abgehoben werden kann. Die Folie entsteht wahrscheinlich durch Trennung von Polymer und Lösungsmittel aufgrund von Oberflächenkräften an der Grenze zwischen Gefäßwand, organischer Lösung und inerter Flüssigkeit und wandert dann an die Oberfläche der inerten Flüssigkeit. Da die Folie kontinuierlich nachgebildet wird, kann sie auch kontinuierlich abgenommen werden, wenn das Reaktionsgefäß einen kreisförmigen Querschnitt hat, z.B. als Folienschlauch.

Die Dicke der Folie ist mitbestimmt durch die Konzentration der Lösung des Hochpolymeren im organischen Lösungsmittel. Im allgemeinen verwendet man 0,5 bis 20 gew.-%ige Lösungen. Das Mengenverhältnis der organischen Lösung zur überschichteten Flüssigkeit ist im allgemeinen 5:1 bis 1:5.

Erfindungsgemäß lassen sich Folien herstellen mit Dicken von etwa 0,05 bis etwa 20 $\mu$m. Insbesondere ist das Verfahren der Erfindung geeignet, sehr dünne Folien, z.B. solche von 0,1 bis 2 $\mu$m Dicke herzustellen.

In einer besonders bevorzugten Ausführungsform des Verfahrens verwendet man als Ausgangsmaterial eine Lösung eines Gemischs von aromatischem Polycarbonat und einem LC-Copolyester, z.B. 10 bis 90 Gew.-Teile Bisphenol-A Polycarbonat und 90 bis 10 Gew.-Teile Copolyester, z.B. Polyethylenterephthalat/Polyhydroxybenzoesäure.

Man erhält dann eine Folie, in der die an sich unverträglichen Hochpolymeren in molekulardisperser Mischung vorliegen. Solche Folien haben eine um das mehrfache höhere Reißfestigkeit als Formkörper, in denen die Polymeren entmischt sind. Aus diesen Folien lassen sich natürlich auch durch übliche Verfahren andere Formkörper herstellen, die dann ebenfalls hervorragende physikalische Eigenschaften haben. Somit ist ein weiterer Gegenstand der Erfindung eine molekulardisperse Mischung von aromatischem Polycarbonat und von Copolyestern, die 10 bis 90 Gew.-% des Polycarbonats enthält, sowie daraus erhaltene Formkörper.

Ausführungsbeispiel

In einer offenen Glasschale mit einem Durchmesser von etwa 7 cm wird eine 2 %ige Lösung einer Mischung im Gewichtsverhältnis 1:1 von Bisphenol-A-Polycarbonat mit einem Molgewicht von $M_n \approx 19000$ und einem Copolyester, aus Polyethylenterephthalat und 35 mol-% p-Hydroxybenzoesäure mit einem Molgewicht von $M_n \approx 6500$ in

Chloroform mit Wasser durchgehend überschichtet. Nach kurzer Zeit bildet sich auf der Wasseroberfläche eine transparente Folie, die z.B. mit einer Pinzette kontinuierlich abgezogen werden kann.

**Ansprüche**

1. Verfahren zur Herstellung von Folien aus filmbildenden organischen Hochpolymeren, dadurch gekennzeichnet, daß man das Hochpolymere in einem inerten organischen Lösungsmittel löst, die Lösung mit einer inerten Flüssigkeit in einem Reaktionsgefäß überschichtet - wobei die spezifische Dichte des organischen Lösungsmittels größer als die der inerten Flüssigkeit ist, das organische Lösungsmittel nicht mit der inerten Flüssigkeit mischbar ist und das organische Hochpolymere in der inerten Flüssigkeit unlöslich ist - und die sich an der Grenzfläche zwischen organischem Lösungsmittel inerter Flüssigkeit und der Wand des Reaktionsgefäßes ausbildende Folie abnimmt.

2. Molekulardisperse Mischung aus aromatischem Polycarbonat und Copolyester mit LC-Eigenschaften, enthaltend 10 bis 90 Gew.-% Polycarbonat.

3. Folie mit einer Dicke von 0.05 bis 20 $\mu$m aus der molekulardispersen Polymeren-Mischung gemäß Anspruch 2.

4. Folie mit einer Dicke von 0,1 bis 2 $\mu$m aus der molekulardispersen polymeren Mischung gemäß Anspruch 2.